Europäisches Patentamt

European Patent Office

Office européen des brevets

(19)

(11) Numéro de publication : **0 008 254**
**B1**

(12) FASCICULE DE BREVET EUROPÉEN

(45) Date de publication du fascicule du brevet :
13.01.82

(51) Int. Cl.³ : **C 04 B 13/00, C 04 B 31/04,**
**F 24 J 3/02**

(21) Numéro de dépôt : 79400493.7

(22) Date de dépôt : 11.07.79

(54) Composition hydrofuge en poudre à base de ciment, son procédé de fabrication et son application.

(30) Priorité : 03.08.78 FR 7822961

(43) Date de publication de la demande :
20.02.80 (Bulletin 80/04)

(45) Mention de la délivrance du brevet :
13.01.82 Bulletin 82/02

(84) Etats contractants désignés :
AT DE FR LU NL SE

(56) Documents cités :
DE - A - 2 315 851
FR - A - 1 352 694
FR - A - 2 203 788
FR - A - 2 214 668
FR - A - 2 241 510
FR - A - 2 297 904

(73) Titulaire : Kraszewski, Richard

F-31450 Odars (FR)

Damiguet, Jean-Jacques
66 Avenue Sainte Marie
F-94160 Saint Mande (FR)

(72) Inventeur : Kraszewski, Richard

F-31450 Odars (FR)
Inventeur : Damiguet, Jean-Jacques
66 Avenue Sainte Marie
F-94160 Saint Mande (FR)

(74) Mandataire : Polus, Camille et al
c/o Cabinet Lavoix 2, Place d'Estienne d'Orves
F-75441 Paris Cedex 09 (FR)

# 0 008 254

Composition hydrofuge en poudre à base de ciment, son procédé de fabrication et son application

La présente invention est relative à une composition hydrofuge à base de ciment renforcée par des fibres de verre présentant des propriétés mécaniques particulièrement intéressantes.

Cette composition est applicable notamment à la formation d'enduits destinés à résister aux intempéries et à la fabrication d'articles moulés.

On connaît un brevet FR 2 241 510 qui décrit un produit de jointoiement, de rebouchage ou de revêtement pour travaux de plâtrerie et de maçonnerie, qui comprend un liant hydraulique pulvérulent, des charges minérales, des colles animales et autres adjuvants, ainsi que des fibres d'armature qui sont notamment des fibres de verre ou d'amiante. Or, il est bien connu que les fibres de verre classiques sont d'une façon générale incompatibles avec l'alcalinité du liant hydraulique. Pour utiliser de telles fibres, on doit donc leur faire subir un traitement préalable de protection contre l'alcalinité afin de leur conférer une résistance à ce milieu agressif.

La présente invention vise à remédier à cet inconvénient en fournissant une composition renforcée par des fibres pouvant directement résister au milieu alcalin du ciment, cette composition présentant en outre des propriétés mécaniques particulièrement intéressantes.

La composition selon l'invention est caractérisée en ce qu'elle comprend, en poids de matière sèche :
- a) de 20 à 60 % de ciment,
- b) de 30 à 70 % d'une charge minérale ou organique,
- c) de 2 à 10 % de fibres de silicate de zirconium, de hafnium, de vanadium ou de césium,
- d) de 0,2 à 1 % de plastifiants du ciment,
- e) de 1 à 3 % de colle,
- f) de 0,1 à 0,5 % d'un agent hydrofuge.

Selon une autre caractéristique, la composition comprend en outre de 0,1 à 2 % de sels tampons qui réduisent l'alcalinité de la composition. L'utilisation de ces sels tampons constitue un mode de réalisation préféré dans le cas où l'alcalinité du ciment est trop importante.

Les sels tampons peuvent être notamment à base de phosphates appropriés tels que des orthophosphates disodiques ou à base de borax.

Cette composition peut éventuellement contenir pour 100 parties en poids de la composition précédente, de 1 à 20 parties en poids d'un agent colorant, de 0,1 à 0,5 partie en poids d'un agent entraîneur d'air, de 0,1 à 0,5 partie en poids d'un agent rétendeur d'eau. On peut en outre ajouter des accélérateurs de prise, des retardeurs de prise, ou des agents mouillants.

La charge minérale ou organique est choisie parmi des constituants minéraux tels que des charges siliceuses et alumineuses, des carbonates, des sulfates et de la limaille métallique, et la charge organique parmi des matières plastiques, synthétiques ou naturelles.

La composition selon la présente invention se présente sous forme d'une poudre ayant une granulométrie fonction de la taille de ses constituants.

Son application est précédée d'une dilution à l'eau afin d'obtenir une pâte plus ou moins consistante selon l'utilisation envisagée.

La composition selon la présente invention est préparée par mélange des divers ingrédients et de préférence en deux temps. On réalise tout d'abord un premier mélange des fibres, par exemple de silicate de zirconium avec la colle, puis on ajoute l'agent hydrofuge. On introduit alors dans le premier mélange ainsi obtenu, le ciment et le plastifiant déjà dispersés dans la charge.

Lorsqu'on utilise des sels tampons, il est préférable de les mélanger initialement avec les fibres et pour rendre cet effet tampon plus persistant, on ajoute alors la colle à ce mélange de fibres et de sels, et on achève la préparation comme indiqué ci-dessus.

Le ciment utilisé dans la composition de l'invention peut être tout type de ciment à prise lente ou rapide (alumineux).

La charge utilisée est une poudre ayant une granulométrie de 1 μ à 10 mm. Elle est choisie parmi les matériaux suivants :

1. Des matières siliceuses ou alumineuses telles que le sable, la silice broyée, la silice colloïdale ou précipitée et le corindon ;

2. Des carbonates tels que le carbonate de magnésium ou de calcium naturel ou traité en surface, ou un carbonate de calcium, potassium, baryum ou magnésium tel que, par exemple, la dolomie ;

3. Des sulfates comme le sulfate de calcium, par exemple le plâtre et le gypse, ou des sulfates de potassium ;

4. Des matériaux isolants, notamment expansés, tels que l'argile, le verre, le bois traité en surface, la pierre ponce, le pouzzolane, des micas tels que la vermiculite, la perlite et la célite, des bétons légers, des matières plastiques telles que le polystyrène, le polyuréthane, le polyéthylène, des résines polyvinyliques et des résines du type urée-formol, des résidus de combustion ;

5. Des limailles métalliques telle que la limaille de fer.

Un des constituants essentiels de la composition selon la présente invention est le constituant c), à savoir les fibres de silicate de zirconium, de hafnium, de vanadium ou de césium ayant de 0,3 mm à 20 cm de long et un diamètre allant jusqu'à 10 mm. La longueur des fibres est fonction de l'application envisagée et du moyen d'application utilisé.

Le plastifiant utilisé est un produit approprié à la qualité de ciment mis en œuvre, et est par exemple de la chaux naturelle, un alkyl-aryl-sulfonate ou un ligno-sulfite.

Les colles qui sont mises en œuvre dans la composition de l'invention sont des polymères, copolymères, et terpolymères vinyliques et acryliques, des colles du type styrène-butadiène, des résines époxy, ou des colles naturelles telles que la gélatine, la caséine, des dérivés d'amidon et des dérivés cellulosiques.

On entend par dérivés, des alcools, des éthers et des esters tels que les acétates et des halogénures tels que les chlorures.

L'agent hydrofuge utilisé est un agent classique tel que des stéarates ou des oléates de zinc, magnésium, sodium ou potassium, ou des silicones en poudre ou des diatomites.

Le produit peut être présenté pour l'application sous forme, d'un ou de deux composants séparés. Lorsqu'il est présenté sous forme de deux composants, l'un est constitué des fibres de silicate de zirconium, alors que l'autre est sous forme d'une poudre renfermant les autres constituants.

Pour préparer le produit avant son application sur un support, on le mélange avec de l'eau à raison de 10 à 40 % en poids d'eau par rapport au poids de la composition sèche.

La composition peut être appliquée sur un support par tout moyen classique approprié, tel que taloche, brosse, pistolet, en une épaisseur d'au moins 3 mm.

Ce produit est utilisable comme enduit de réagrégage pour la rénovation et la consolidation de vieux subjectiles et de vieux parements, comme produit de colmatage et de rebouchage de fissures et comme produit de scellement. On peut bien évidemment l'utiliser sur des supports neufs afin d'obtenir un enduit, par exemple, de façade.

On peut également, à l'aide de la composition selon la présente invention, fabriquer des produits moulés par coulée ou projection ou injection.

On peut encore envisager la fabrication de panneaux décoratifs ou non obtenus par projection de cette composition.

Il est à noter que cette composition permet d'obtenir des revêtements ou des plaques minces (par exemple de 3 à 10 mm d'épaisseur) sur de grandes surfaces (pouvant aller jusqu'à 15 m$^2$).

L'application d'un enduit préparé à l'aide de la composition selon la présente invention remplace les multiples couches d'un enduit hydraulique traditionnel. Par exemple, lors de la réfection d'une façade, cet enduit peut être directement appliqué après élimination des parties non adhérentes.

L'enduit sec obtenu à l'aide de la composition de l'invention est étanche, en particulier au ruissellement des eaux de pluie, il est imputrescible, incombustible et isolant thermique et phonique selon la charge utilisée.

L'enduit selon l'invention, après son application sur un support et son durcissement, forme une carapace rigide qui maintient le support ; ainsi, dans le cas d'un enduit de façade, il forme une véritable ceinture de renforcement des murs qui garde sa cohérence, même si certaines parties sous-jacentes de la façade ne sont plus adhérentes.

L'exemple suivant est donné à titre d'illustration de la présente invention.

## Exemple 1

On prépare une composition d'enduit comprenant les produits suivants dans les proportions indiquées :

| | |
|---|---|
| — Ciment blanc CPA 500 (ou CPA 400) | 50 % |
| — Silice (0 à 600 μ) | 43,7 % |
| — Fibres de silicate de zirconium (longueur 24 mm) | 3 % |
| — Plastifiant à base d'alkyl-arylsulfonate (Ribalite) | 0,1 % |
| — Colle vinylique | 2 % |
| — sels tampons (orthodiphosphate de Na) | 1 % |
| — Agent hydrofuge à base de stéarate de Mg | 0,2 %. |

Cette composition est préparée en mélangeant tout d'abord les fibres de silicate de zirconium avec le sel tampon et la colle, puis en ajoutant la proportion désirée de stéarate et en introduisant enfin dans le mélange ainsi obtenu, le ciment dispersé dans la silice utilisée comme charge.

Afin de démontrer les qualités mécaniques de l'enduit obtenu, on applique sur une plaque de

3

polystyrène expansé de 1 cm d'épaisseur, une couche de 6 mm d'épaisseur d'enduit préparé à l'aide de la composition ci-dessus additionnée de 20 % en poids d'eau.

Après 28 jours de séchage à 20 °C et 65 % d'humidité relative, on met en évidence la résistance à la perforation en réalisant un essai à l'aide de l'appareil dit Perfo-Test de Martinet et Baronnie, selon les normes C.S.T.B. (Centre Scientifique et Technique du Bâtiment). Ce test consiste à projeter un poinçon avec une inertie déterminée contre la surface de l'enduit et à mesurer la profondeur de la perforation.

A l'aide d'un poinçon de 4 mm de diamètre, l'empreinte est de 1 mm de profondeur sur la surface de l'enduit, mais il n'y a pas perforation, ni enfoncement dans la couche molle de polystyrène.

A l'aide d'un poinçon de 6 mm de diamètre, aucune trace de détérioration n'est visible sur la surface de l'enduit.

On réalise également un essai de choc à l'aide d'une bille ayant une énergie de 3,75 Joules, toujours à l'aide de l'appareil dit Perfo-Test, selon les normes C.S.T.B. Dans cet essai on n'observe également aucune altération de l'état de surface.

Les résultats des essais mentionnés ci-dessus donnent un classement d'indice P = 4 suivant les normes C.S.T.B.

Afin de mettre en évidence la résistance en flexion d'une couche d'enduit préparée à l'aide de la composition de l'invention, on réalise l'essai décrit ci-après.

On prépare un échantillon de 150 mm de longueur, de 30 mm de largeur (désignée par a) et de 6 mm d'épaisseur (désignée par b), en coulant la composition selon l'exemple 1 dans un moule de dimension correspondante.

On place cet échantillon sur deux supports parallèles rectilignes sous forme de barres, distants de 135 mm (désigné par L), dans le sens de la longueur de l'échantillon et on applique sur la surface de l'échantillon, en deux points situés entre les supports et à une distance L/3 de chaque support, deux masses correspondant à un poids total P.

Le module de rupture est calculé suivant la formule :

$$\text{Module de rupture} = \frac{P.L}{ab^2}$$

Il est dans cet exemple de 210 kg/cm².

L'ensemble des résultats d'essais mentionnés ci-dessus montre non seulement la grande dureté de l'enduit réalisé, mais également son aptitude à résister à des contraintes en flexion et à l'arrachement qui sont rencontrées lors des mouvements du gros œuvre sur lequel l'enduit est appliqué.

Ces valeurs et résultats d'essais ne sont obtenus qu'en respectant les proportions des divers constituants et leur ordre d'incorporation.

La composition selon la présente invention peut notamment être utilisée dans la fabrication d'éléments pour la captation de l'énergie solaire.

Ces éléments sont constitués d'une masse durcie de la composition dans laquelle sont ménagés des canaux de circulation pour un fluide caloporteur.

Ainsi, par exemple, on peut noyer dans la composition des tubes cylindriques ou d'une autre forme, en un matériau approprié, tel qu'une matière plastique, de l'acier, de la fonte, ces tubes étant reliés entre eux de façon à ménager un trajet pour un fluide caloporteur et étant également reliés par un circuit extérieur à un dispositif d'accumulation ou d'échange thermique.

Etant donné que la composition selon la présente invention peut être chargée à l'aide d'un matériau conducteur de la chaleur (limaille métallique), on place les canaux de circulation du fluide caloporteur sous une couche d'une telle composition dont la surface extérieure est exposée au rayonnement solaire. Cependant, afin que la déperdition de chaleur soit réduite, on utilise de l'autre côté des canaux, par rapport à la surface exposée au rayonnement solaire, une composition chargée avec un matériau isolant tel que pouzzolane perlite, billes de polystyrène, laitier expansé, béton expansé, pierre ponce.

On obtient ainsi à la fois une bonne récupération de la chaleur due au rayonnement solaire et une isolation thermique de l'autre face de l'élément. Cette application peut notamment être mise en œuvre dans la réalisation d'enduits extérieurs de bâtiments d'habitation ou autres.

On peut également envisager une telle application dans des panneaux destinés à être placés sur des toits ou des terrasses, la surface extérieure pouvant imiter les tuiles ou ardoises suivant la force donnée au moule destiné à la réalisation de ces panneaux. Dans cette application, l'utilisation en couche mince d'une composition uniquement chargée de matériaux conducteurs peut présenter plus d'intérêt afin de diminuer les poids suspendus.

On donnera ci-après, à titre d'illustration, des exemples d'une telle application.

Exemple 2

Sur des parois extérieures en brique, parpaings ou béton, d'un bâtiment, on applique en une épaisseur de 3 cm environ un enduit isolant constitué de la composition suivante diluée à l'eau :

4

| | |
|---|---|
| — Ciment | 30 % |
| — Fibres (silicate de Zr) | 2 % |
| — Plastifiant (ligno-sulfite) | 0,2 % |
| — Colle cellulosique | 2 % |
| — Sels tampons (borax) | 1 % |
| — Agent hydrofuge (stéarate de Mg) | 0,1 % |
| — Laitier expansé | 64,7 % |

On obtient, à l'aide de cette composition, un mortier dont la densité du produit sec est de 0,4 environ. On fixe alors sur cet enduit, par un moyen mécanique (agrafage) ou par collage, des tuyaux en matière plastique de faible diamètre, de 0,2 à 0,5 cm environ, ces tuyaux étant reliés entre eux de façon à déterminer un trajet d'écoulement pour un fluide caloporteur tel que l'eau.

On applique alors sur la première couche d'enduit et les tuyaux, une deuxième couche, en une épaisseur de 8 mm environ, d'un enduit conducteur ayant la composition suivante :

| | |
|---|---|
| — Ciment | 40 % |
| — Fibres de silicate de Zr | 5 % |
| — Plastifiant (ligno-sulfite) | 0,2 % |
| — Colle (terpolymère vinyl-versatate) | 2 % |
| — Sels tampons (borax) | 1 % |
| — Agent colorant | 0,1 % |
| — Silice | 45 % |
| — Limaille métallique | 8 %. |

L'ensemble ainsi réalisé de l'enduit isolant, des tuyaux de circulation d'eau et d'enduit conducteur, constitue un élément de captation de l'énergie solaire permettant de récupérer de l'énergie par chauffage de l'eau, utilisée notamment pour le chauffage ou l'eau sanitaire, et joue néanmoins un rôle d'isolation thermique du bâtiment.

## Exemple 3

Cet exemple illustre la fabrication de panneaux constituant des éléments de toiture.

Dans un moule métallique ou en polyester, dont le fond reproduit la forme de revêtements de toiture tels que des tuiles ou des ardoises, de dimensions 1 m × 1 m, on projette un mortier en une épaisseur de 6 mm, ayant la composition suivante :

| | |
|---|---|
| — Ciment | 50 % |
| — Fibres de silicate de Zr | 6 % |
| — Plastifiant (alkyl-aryl sulfonate) | 0,2 % |
| — Colle (vinyl-éthylène) | 2 % |
| — Sels tampons (orthodiphosphate de Na) | 1 % |
| — Agent hydrofuge (silicone) | 0,2 % |
| — Silice fine | 32,6 % |

5

**0 008 254**

— Charge conductrice (limaille de fer)          8 %.

On fixe ensuite par collage sur la couche de mortier appliquée dans le fond du moule, un tuyau en matière plastique de faible diamètre (0,2 à 0,5 cm) en forme de serpentin, et on applique ensuite une nouvelle couche du mortier ayant la composition précédente, mais comportant en outre un colorant. La couche appliquée présente une épaisseur telle qu'elle recouvre de 6 mm les tuyaux en matière plastique.

Les bords des panneaux ont une forme telle qu'ils permettent un montage à encastrement avec des panneaux adjacents et les tuyaux de deux panneaux adjacents sont reliés entre eux pour former un trajet d'écoulement du fluide caloporteur.

**Revendications**

1. Composition hydrofuge en poudre à base de ciment, de charge minérale, de colle et autres adjuvants renforcée par des fibres de verre, caractérisée en ce qu'elle comprend, en poids de matière sèche :
     a) de 20 à 60 % en poids de ciment,
     b) de 30 à 70 % d'une charge minérale ou organique,
     c) de 2 à 10 % de fibres de silicate de zirconium, de hafnium, de vanadium ou de césium,
     d) de 0,2 à 1 % de plastifiants du ciment,
     e) de 1 à 3 % de colle,
     f) de 0,1 à 0,5 % d'un agent hydrofuge.

2. Composition selon la revendication 1, caractérisée en ce qu'elle comprend en outre de 0,1 à 2 % de sels tampons réduisant l'alcalinité.

3. Composition selon la revendication 2, caractérisée en ce que les sels tampons sont choisis parmi des phosphates et le borax.

4. Composition selon l'une quelconque des revendications 1 à 3, caractérisée en ce que la charge minérale est choisie parmi des constituants minéraux tels que des charges siliceuses ou alumineuses, des carbonates, des sulfates et de la limaille métallique, et la charge organique parmi des matières plastiques naturelles ou synthétiques, sous forme d'une poudre ayant une granulométrie de 1 μm à 10 mm.

5. Composition selon l'une quelconque des revendications 1 à 5, caractérisée en ce que les fibres de silicate ont un diamètre jusqu'à 10 mm et une longueur de 0,3 mm à 20 cm.

6. Composition selon l'une quelconque des revendications précédentes, caractérisée en ce que le plastifiant est choisi parmi la chaux naturelle, un alkyl-aryl sulfonate ou un lignosulfite.

7. Composition selon l'une quelconque des revendications précédentes, caractérisée en ce que la colle est choisie parmi des polymères, copolymères et terpolymères vinyliques et acryliques, des colles du type styrène-butadiène, des résines époxy ou des colles naturelles telles que la gélatine, la caséine, des dérivés d'amidon et des dérivés cellulosiques.

8. Composition selon l'une quelconque des revendications précédentes, caractérisée en ce que l'agent hydrofuge est choisi parmi des stéarates ou des oléates de zinc, magnésium, sodium ou potassium, ou des silicones en poudre ou des diatomites.

9. Composition selon l'une quelconque des revendications précédentes, caractérisée en ce qu'elle contient en outre pour 100 parties de la composition selon la revendication 1, de 1 à 20 parties en poids d'un agent colorant, de 0,1 à 0,5 partie en poids d'un agent entraîneur d'air, de 0,1 à 0,5 partie en poids d'un agent rétendeur d'eau.

10. Procédé de préparation d'une composition selon l'une quelconque des revendications précédentes, caractérisé en ce qu'on mélange tout d'abord les fibres de silicate, éventuellement avec les sels tampons et avec la colle, puis on ajoute l'agent hydrofuge et on introduit alors dans le mélange ainsi obtenu le ciment et le plastifiant préalablement dispersés dans la charge.

11. Enduit ou produit moulé, caractérisé en ce qu'il est préparé à l'aide d'une composition selon l'une quelconque des revendications précédentes, diluée à raison de 10 à 40 % de son poids d'eau, puis appliquée sur un support ou un moule par un moyen approprié.

12. Elément pour la captation de l'énergie solaire, caractérisé en ce qu'il comprend une composition selon l'une quelconque des revendications 1 à 10, dans laquelle sont ménagés des canaux de circulation pour un fluide caloporteur.

**Claims**

1. Cement-based powdered water-repellent composition of inorganic filler, of adhesive, and other adjuvants reenforced by fiberglass characterized in that it includes, expressed as dry weight :
     a) 20-60 % cement,
     b) 30-70 % inorganic and organic filler,

6

c) 2-10 % zirconium, hafnium, vanadium or cesium silicate fibres,

d) 0.2-1 % plasticizers for cement,

e) 1-3 % adhesive,

f) 0.1-0.5 % water-repellent.

2. Composition as claimed in claim 1, additionally comprising 0.1-2 % alkalinity-reducing buffer salts.

3. Composition as claimed in claim 2, wherein said buffer salts are selected from phosphates and borax.

4. Composition as claimed in any one of the claims 1-3, wherein the inorganic filler is selected from inorganic components such as silica or alumina fillers, carbonates, sulfates and metal filings, and the organic filler is selected from natural or synthetic plastic materials, in powdered form having a particle size of 1 μ to 10 mm.

5. Composition as claimed in any one of the claims 1-4, wherein the silicate fibres have a diameter of up to 10 mm and a length of 0.3 mm to 20 cm.

6. Composition as claimed in any one of the preceding claims, wherein the plasticizer is selected from natural limestone, an alkyl-aryl sulfonate or a lignosulfite.

7. Composition as claimed in any one of the preceding claims, wherein the adhesive is selected from vinylic and acrylic polymers, copolymers and terpolymers, styrene-butadiene adhesives, epoxy resins and natural adhesives such as gelatin, casein, starch derivatives and cellulose derivatives.

8. Composition as claimed in any one of the preceding claims, wherein the water-repellent agent is selected from zinc, magnesium, sodium and potassium stearates and oleates, powdered silicones, and diatomites.

9. Composition as claimed in any one of the preceding claims, comprising additionally, per 100 parts by weight of the composition of claim 1, 1-20 parts by weight of a coloring agent, 0.1-0.5 part by weight of an air-removing agent, 0.1-0.5 part by weight of a water-retaining agent.

10. Process for the preparation of a composition as claimed in any one of the preceding claims, comprising first mixing the silicate fibres, optionally together with the buffer salts and the adhesive, then adding the water-repellent agent, and then adding to the resulting mixture the cement and the plasticizer previously dispersed in the filler.

11. Coating or molded product, prepared with a composition as claimed in any one of claims 1-9, diluted with 10-40 wt% water with respect to its weight, and then applied to a substrate or a mold by any suitable means.

12. Member for collecting solar energy, comprising a composition as claimed in any one of the claims 1-9, in which are provided channels for the flow of a heat-carrying fluid.

**Ansprüche**

1. Wasserabstoßende pulverförmige Zusammensetzung auf der Basis von Zement mit mineralischem Zusatz, Leim und anderen Zusätzen und mit Glasfasern verstärkt, gekennzeichnet durch Gehalt an folgenden Bestandteilen, bezogen auf das Trockengewicht :

a) von 20 bis 60 % Zement,

b) von 30 bis 70 % mineralische oder organische Füllstoffe,

c) von 2 bis 10 % Zirkon-, Hafnium-, Vanadin- oder Cäsiumsilikatfasern,

d) von 0,2 bis 1 % Plastifizierungsmittel für Zement,

e) von 1 bis 3 % Leim,

f) von 0,1 bis 0,5 % wasserabweisendes Mittel.

2. Zusammensetzung nach Anspruch 1, dadurch gekennzeichnet, daß sie zusätzlich 0,1 bis 2 % Puffersalze zur Verminderung der Alkalinität enthält.

3. Zusammensetzung nach Anspruch 2, dadurch gekennzeichnet, daß sie Phosphate und/oder Borax als Puffersalze enthält.

4. Zusammensetzung nach einem der vorhergehenden Ansprüche 1 bis 3, dadurch gekennzeichnet, daß als mineralischer Füllstoff siliziumhaltige oder aluminiumhaltige Zusätze, Carbonate, Sulfate oder Metallspäne verwendet werden, und daß als organische Füllstoffe natürliche oder synthetische plastische Materialien in Pulverform mit einer Granulometrie von 1 μ bis 10 mm verwendet werden.

5. Zusammensetzung nach einem der vorhergehenden Ansprüche 1 bis 5, dadurch gekennzeichnet, daß die Silikatfasern einen Durchmesser von bis zu 10 mm und eine Länge von 0,3 mm bis 20 cm besitzen.

6. Zusammensetzung nach einem der vorhergehenden Ansprüche, dadurch gekennzeichnet, daß als Plastifizierungsmittel Naturkalk, ein Alkylarylsulfonat oder ein Lignosulfit verwendet wird.

7. Zusammensetzung nach einem der vorhergehenden Ansprüche, dadurch gekennzeichnet, daß als Leim Vinyl- und/oder Acrylpolymere, -copolymere, und/oder -terpolymere, Styrol/Butadienleime, Epoxyharze oder natürliche Leime wie Gelatine, Casein, Amidonderivate sowie Cellulosederivate verwendet werden.

8. Zusammensetzung nach einem der vorhergehenden Ansprüche, dadurch gekennzeichnet, daß als wasserabweisendes Mittel Zink-, Magnesium-, Natrium- und/oder Kaliumstearate oder -oleate oder pulverförmige Silikone oder Kieselgur verwendet werden.

9. Zusammensetzung nach einem der vorhergehenden Ansprüche, dadurch gekennzeichnet, daß sie zusätzlich je 100 Teile der Zusammensetzung gemäß Anspruch 1 1 bis 20 Gewichtsteile eines Farbstoffs, 0,1 bis 0,5 Gewichtsteile eines Luftporenzusatzstoffes, 0,1 bis 0,5 Gewichtsteile eines wasserzurückhaltenden Mittels enthält.

10. Verfahren zur Herstellung einer Zusammensetzung gemäß den vorhergehenden Ansprüchen, dadurch gekennzeichnet, daß man zunächst die Silikatfasern, gegebenenfalls mit den Puffersalzen und dem Leim, vermischt, daß man dann das wasserabweisende Mittel zusetzt und dann in die Mischung den Zement und das Plastifizierungsmittel, das zuvor in der Zugabe dispergiert ist, zugibt.

11. Verputz oder Formkörper, gekennzeichnet durch die Herstellung mittels einer Zusammensetzung gemäß einem der vorhergehenden Ansprüche, die mit 10 bis 40 % Wasser, bezogen auf das Eigengewicht, verdünnt ist, und die dann auf einen Träger oder eine Form in geeigneter Weise aufgebracht ist.

12. Element zum Gewinnen von Sonnenenergie, dadurch gekennzeichnet, daß es eine Zusammensetzung einer der Ansprüche 1 bis 10 enthält, und daß in dem Element Zirkulationskanäle für ein wärmeübertragendes Fluid angeordnet sind.